# EUROPÄISCHE PATENTSCHRIFT

(11) **EP 2 146 571 B1**
(45) Veröffentlichungstag und Bekanntmachung des Hinweises auf die Patenterteilung: **01.05.2013**
(21) Anmeldenummer: 08717320.9
(22) Anmeldetag: 03.03.2008
(51) Int. Cl.: A01N 25/10, A01N 43/80, A01N 59/16, A01N 25/12, A01N 25/34, C08L 61/28

(54) **BIOZIDE ZUSAMMENSETZUNG ENTHALTENDE HARZZUSAMMENSETZUNGEN, KOMPOSITMATERIALIEN UND LAMINATE**
BIOCIDAL COMPOSITION CONTAINING RESIN COMPOSITIONS, COMPOSITE MATERIALS, AND LAMINATES
COMPOSITIONS DE RESINE CONTENANT UNE COMPOSITION BIOCIDE, MATERIAUX COMPOSITES ET LAMINES

(30) Priorität: 30.04.2007 DE 102007020390
(43) Veröffentlichungstag der Anmeldung: 27.01.2010
(73) Patentinhaber: Pfleiderer Holzwerkstoffe GmbH, 92318 Neumarkt (DE)
(72) Erfinder: NONNINGER, Kurt, 59469 Ense (DE); KLEIN, Herbert, 59757 Arnsberg (DE)
(74) Vertreter: HOFFMANN EITLE
(86) Internationale Anmeldenummer: PCT/EP2008/052557
(87) Internationale Veröffentlichungsnummer: WO 2008/131985

(56) Entgegenhaltungen:
- WO-A-02/44470
- WO-A-2004/099308
- WO-A-2007/025917
- WO-A-2007/026004
- WO-A-2007/042416
- WO-A-2008/030458
- US-A1- 2003 203 991

## Beschreibung

Die vorliegende Erfindung betrifft eine biczide Zusammensetzung, die mindestens ein nanoskaliges Metalloxid der Übergangselemente, mindestens eine organische biozide Verbindung und mindestens ein Aminoplastharz umfasst.

Schließlich betrifft die Erfindung Kompositmaterialien und Laminate, die die erfindungsgemäße Harzzusammensetzung enthalten, wodurch deren Oberflächen biozide Eigenschaften aufweisen.

Biozide Zusammensetzungen werden in vielen Bereichen zur Bekämpfung von z.B. Bakterien, Pilzen, Algen etc. verwendet. Neben einem temporären Einsatz in Form von festen oder flüssigen Zusammensetzungen, die im Bedarfsfall vereinzelt oder regelmäßig zur Entfernung von biologischem Material eingesetzt werden, ist es bekannt, eine dauerhafte biozide Umgebung auf insbesondere den Oberflächen von Materialien bereitzustellen, indem den Materialien biozide Mittel beigefügt werden. Durch die in der Umgebung der Oberfläche vorhandenen bioziden Wirkstoffe sowie ggf. langsame Diffusion derselben aus tieferen Schichten der Materialien wird kontinuierlich über einen langen Zeitraum eine biozide Wirkung erzielt.

Oberflächen und Materialien, bei denen biozide Langzeitwirkungen erwünscht sind, sind insbesondere Materialien, die mit Lebensmitteln in Kontakt kommen, sowie Materialien, die in stark keimbelasteten Umgebungen eingesetzt werden. Beispiele hierfür sind Arbeitsoberflächer in privaten und gewerblichen Küchen, Anrichten, Verkaufstheken, Tischoberflächen, Fußböden, Dusch- und Umkleidekabinen, allgemeinen Oberflächen in Krankenhausumgebungen und Einrichtungen in Schwimm- und Badeanstalten.

Damit eine biczide Zusammensetzung stabil über einen langen Zeitraum hinweg ihre bioziden Eigenschaften beibehalten kann, ist es erforderlich, dass die biozide Wirkung durch Umwelteinflüsse, insbesondere Wärmeeinwirkung, nicht nachhaltig beeinträchtigt wird. Darüber hinaus muss die keimreduzierende Wirkung der Zusammensetzung in dem diese enthaltenden Material ein bestimmtes Mindestmaß überschreiten, damit von einer für die Praxis ausreichenden bioziden Wirkung gesprochen werden kann. Als Grenzwert kann diesbezüglich eine Reduktion der Keimzahl nach 24 Stunden, bestimmt nach einem standardisierten Verfahren wie es z.B. in JIS Z 2801 beschrieben ist, um mindestens zwei Zehnerpotenzen angesehen werden. In der Praxis bevorzugt ist eine Reduktion um mindestens drei Zehnerpotenzen.

Als organische biozide Mittel sind im Stand der Technik eine Vielzahl von Verbindungen und Verbindungsklassen bekannt. Beispiele hierfür sind Isothiazolinonderivate, Phenolderivate, verschiedene Bromsäurederivate, Formaldehyd und Derivate davon, Guanidine, chlor- und/oder bromhaltige Verbindungen, Harnstoffderivate usw. Diese organischen bioziden Verbindungen haben jedoch keine ausreichende thermische Beständigkeit, d.h. sie werden durch Wärmeeinwirkung in Abhängigkeit von der erreichten Temperatur mehr oder weniger schnell zersetzt, so dass eine Langzeitwirkung in ausreichender Stärke nicht erzielt werden kann.

Ferner sind anorganische Verbindungen bekannt, die biozide Eigenschaften aufweisen, wie z.B. Borate, silberdotierte Glaspartikel und silberdotierte Zeolite. ZnO-haltige Salben werden seit langem zur Wundbehandlung eingesetzt.

Mit silberdotierten Glaspartikeln oder Zeoliten kann zwar eine Temperaturstabilität erreicht werden, diese sind aber sehr teuer. Darüber hinaus führt die Verwendung dieser Mittel in Hochdruckschichtstoffplatten (HPL), die unter Verarbeitung in HPL Pressen hergestellt werden, zu einer Beschädigung der aus hartverchromtem Stahl oder Messingblech gefertigten Presswerkzeuge der HPL Pressen. Für derartige Produkte ist der Zusatz von silberdotierten Glaspartikeln oder Zeoliten daher häufig ungeeignet.

Metalloxide, wie beispielsweise ZnO, MgO, SnO, TiO₂, sind, in fein verteilter Form, als Strahlung absorbierende Agenzien in Sonnenschutzmitteln enthalten. Eine mögliche biozide Wirkung stand bislang nicht im Fokus des Interesses. Soweit ein biczide Wirkung bekannt war, wie beispielsweise von ZnO, war diese jedenfalls nicht ausreichend zur Erzielung biozider Eigenschaften von festen Oberflächen wie oben dargestellt, d.h. der in der Praxis bevorzugte keimreduzierende Effekt um mindestens drei Zehnerpotenzen (gemessen nach dem oben angegebenen Verfahren gemäß JIS Z 2801) wird nicht erreicht.

Mit den bekannten bioziden Mitteln war es daher bislang nicht möglich, einen Gegenstand in einer solchen Weise mit bioziden Eigenschaften auf seiner Oberfläche auszurüsten, die auch dann über einen langen Zeitraum konstant ist, wenn die Oberfläche erhöhten Temperaturen ausgesetzt wird.

Der Bedarf für derartige biozide Zusammensetzungen ist jedoch erheblich. Beispielsweise werden Arbeitsflächen in privaten wie gewerblichen Küchen, Tischplatten, sonstige Ablageflächen in der Gastronomie, stark von der Sonne beschienene Oberflächen usw. wiederholt erhöhten Temperaturen ausgesetzt. Im Bereich von Küchen erfolgt dieses insbesondere durch heiße Töpfe, Pfannen und sonstige erhitzte Arbeitsgeräte, die auf diesen Oberflächen abgestellt werden. Hierdurch, wie auch durch starke Sonneneinstrahlung auf insbesondere dunkle Oberflächen, können erhebliche Temperaturen erreicht werden. Eine wärmestabile biozide Ausrüstung dieser Oberflächen stellt daher eine erhebliche Verlängerung der Lebensdauer und folglich des Wertes des betreffenden Gegenstandes dar.

WO 2007/025917 betrifft eine biozide Zusammensetzung, die nanopartikuläres Silber als notwendigen Bestandteil in Kombination mit mindestens einem weiteren Bestandteil, ausgewählt aus Silbersalzen, nanopartikulärem Zinkoxid, Chitosan und Chitosanderivaten enthält. Diese finden beispielsweise Verwendung zur Herstellung von Oberflächenbeschichtungen von z.B. Holz, Papier, Textilien, Medizinprodukten, Sanitärartikeln und Kunststoffen, sowie für Antifoulingbeschichtungen, Putze, Bodenbeläge, etc.

WO 2004/099308 beschreibt antimikrobielle Zusammensetzungen, die 90,0-99,7% Polypropylen und 0,3-1,0% eines antimikrobiellen Masterbatches aus 90% Polypropylen, 5% Isothiazolinverbindung (z.B. 4,5-Dichlor-2-(n-octyl)-4-isothazolin-3-on und/oder 2-(n-octyl)-4-isothiazolin-3-on) und 5% einer anorganischen Verbindung umfassen. Die anorganische Verbindung ist z.B. ZnO. Diese antimikrobiell ausgerüstete Polypropylenzusammensetzung wird z.B. verwendet zur Herstellung von Kunststoffteilen in Waschmaschinen.

Folglich ist es eine erfindungsgemäße Aufgabe, eine Harzzusammensetzung bereitzustellen, die geeignet ist, ein Material mit bioziden Eigenschaften auszustatten, die ein für die Praxis ausreichendes Maß erreicht, und auch bei wiederholter thermischer Belastung erhalten bleibt.

Gelöst wird die erfindungsgemäße Aufgabe durch Bereitstellung einer Harzzusammensetzung, die folgendes umfasst:
(1) mindestens ein Aminoplastharz und
(2) eine biozide Zusammensetzung, umfassend
   (i) mindestens eine organische biozide Verbindung, und
   (ii) ein anorganisches Biozid,
   wobei das anorganische Biozid aus mindestens einem nanoskaligen Metalloxid besteht, ausgewählt aus ZnO, BaTiO₃, SrTiO₃, TiO₂, WO₃, SnO₂, Al₂O₃, NiO, ZrO₂ und MgO.

Des Weiteren wird die erfindungsgemäße Aufgabe gelöst durch Bereitstellung eines Kompositmaterials, das ein mit der oben genannten Harzzusammensetzung imprägniertes Flächengebilde umfasst. Schließlich wird die erfindungsgemäße Aufgabe gelöst durch ein Laminat, das einen Trägerwerkstoff und auf mindestens einem Teil von mindestens einer Oberfläche eine Harzzusammensetzung und/oder ein Kompositmaterial wie oben definiert umfasst.

Weitere und bevorzugte Ausgestaltungen des erfindungsgemäßen Gegenstandes werden nachfolgend detailliert erläutert.

Die erfindungsgemäße biozide Harzzusammensetzung umfasst ein anorganisches Biozid, das aus mindestens ein nanoskaliges Metalloxid bestimmter Übergangselemente (nachfolgend abkürzend auch als "*Metalloxid*" bezeichnet) besteht, und mindestens eine organische biozide Verbindung (nachfolgend abkürzend auch als "*organische Bakterizid*" bezeichnet).

Als organisches Bakterizid kommen eine Reihe von Verbindungen in Frage, wie beispielsweise die bereits eingangs erwähnten Verbindungsgruppen sowie zugelassene Konservierungsmittel für Lebensmittel. Bevorzugte Verbindungen sind die Gruppe der Isothiazolinone, sowie Benzylalkohol, 2,4-Dichlorbenzylalkohol, 2-Phenoxyethanol, 2-Phenoxyethanolhemiformal, Phenylethylalkohol, 5-Brom-5-nitro-1,3-dioxan, Formaldehyd und Formaldehyd-Depotstoffe (z.B. N-Formale, wie N,N'-Dimethylolharnstoff, N-Methylolharnstoff, Dimethyloldimethylhydantoin, N-Methylolchloracetamid und Umsetzungsprodukte von Allantoin; Glykolformale, wie Ethylenglykolformal und Butyldiglykolformal; und Benzylformal), Dimethyloldimethylhydantoin, Glyoxal, Glutardialdehyd, Sorbinsäure und Sorbate (z.B. E200, E202, E203), Benzoesäure und Benzoate (z.B. E210-E213), Salicylsäure, p-Hydroxybenzoesäureester (z.B. E214-E219), Chloracetamid, N-Methylolchloracetamid, Phenole (z.B. p-Chlor-m-kresol, o-Phenylphenol, Biphenyl und Natriumorthophenylphenol), 4,4-Dimethyl-1,3-oxazolidin, 1,3,5-Hexahydrotriazinderivate, Quartäre Ammoniumverbindungen (z.B. N-Alkyl-N,N-dimethylbenzylammoniumchlorid und Di-n-decyldimethylammoniumchlorid), Cetylpyridiniumchlorid, Diguanidin, Polybiguanid, Chlorhexidin, 1,2-dibromdicyanobutan, 3,5-Dichlor-4-hydroxybenzaldehyd, Ethylenglykolhemiformal, Tetra-(hydroxymethyl)-phosphoniumsalze, Dichlorophen, 2,2-Dibrom-3-nitrilopropionsäureamid, 3-lod-2-propinyl-N-butylcarbamat, Methyl-N-benzimidazol-2-ylcarbamat, 2-n-Octylisothiazolin-3-on, 4,5-Dicihlor-2-n-octylisothiazolin-3-on, 4,5-Trimethylen-2-methylisothiazolin-3-on, 2,2'-Dithio-dibenzoesäure-di-N-methylamid, 2-Thiocyanomethylthiobenzthiazol, C-Formale (z.B. 2-Hydroxymethyl-2-nitro-1,3-propandiol und 2-Brom-2-nitropropan-1,3-diol), Methylenbisthiocyanat, Lysozym (E 1105), Nisin (E234), Natamycin (E235), Hexamethylentetramin (E239), Dimethyldicarbonat (E242), Nitrite, Nitrate (z.B. E251-E252), Propionsäure und Propionate (z.B. E280-E283), Borsäure, Natriumtetraborat, Schwefeldioxid und Sulfite (z.B. E220-E224, E226-E228 und E385) und Ethylendinatriummethylendiamintetraacetat.

In einer besonders bevorzugten Ausführungsform enthält die erfindungsgemäße biozide Harzzusammensetzung mindesten ein organisches Bakterizid aus der Gruppe der Isothiazolinone, ggf. zusammen mit einem oder mehreren anderen Biozid(en) wie oben aufgeführt. Bevorzugte Isothiazolinonverbindungen sind Alkylisothiazolinone (worin die Alkylgruppe vorzugsweise 1-12, vorzugsweise 1-10 und weiter bevorzugt 1-8 Konlensteffatome aufweist, und insbesondere Methyl ist), Benzisothiazolinone und Chlorisothiazolinone, insbesondere Methylisothiazolinon, Benzisothiazolinon und Mischungen daraus. Noch weiter bevorzugt sind 2-Methylisothiazolin-3-on und 5-Chlor-2-Methylisothiazolinon, 2-Methyl-3-isothiazolinon, 2-Isothiazolinon, 2-n-Octylisothiazolin-3-on, 1,2-Benzisothiazolin-3-on und Mischungen daraus.

Das anorganische Biozid besteht aus mindestens einem Metalloxid ausgewählt aus ZnO, BaTiO₃, SrTiO₃, TiO₂, WO₃, SnO₂, Al₂O₃, NiO, ZrO₂ und MgO. Besonders bevorzugt sind farblose Metalloxide wie beispielsweise ZnO.

Das Metalloxid liegt in nanoskaliger Form vor. "Nanoskalig" bedeutet hierin, dass die mittlere Teilchengröße des Metalloxids vorzugsweise nicht mehr als 1000 nm beträgt, insbesondere 1-1000 nm, weiter bevorzugt 5-500 nm, noch weiter bevorzugt 10-250 nm, und besonders bevorzugt 20-100 nm.

Die durchschnittliche (mittlere) Teilchengröße wird erfindungsgemäß wie folgt bestimmt. Anhand einer definierten Probe wird zunächst nach einem BET (Brunauer-Emmet-Teller)-Verfahren die Oberfläche der Probe anhand der Oberflächenadsorption von N₂ bei -196°C nach dem in DIN 66131 beschriebenen Verfahren bestimmt. Aus der intrinsischen Dichte des untersuchten Materials und der Masse (dem Gewicht) der Probe wird das Volumen aller Teilchen bestimmt. Unter den Annahmen, dass die Teilchen (a) keine Poren aufweisen und folglich eine "glatte" Oberfläche haben, (b) kugelförmig sind und (c) auf ihrer gesamten äußeren Oberfläche mit dem Testgas belegt sind, wird aus dem Verhältnis vom Volumen zur Oberfläche aller Teilchen der durchschnittliche Teilchendurchmesser bestimmt, der hierin als mittlere Teilchengröße angegeben ist.

Gemäß einer besonders bevorzugten Ausführungsform umfasst die erfindungsgemäße biozide Zusammensetzung mindestens ein Isothiazolinonderivat und nanoskaliges Zinkoxid. Weiter bevorzugte Isothiazolincnderivate sind die oben angegebenen weiter bevorzugten Benzisothiazolinonderivate und Mischungen daraus.

Das Mischungsverhältnis von organischem Biozid, vorzugsweise mindestens einem Isothiazolinonderivat, zu dem Metalloxid, vorzugsweise Zinkoxid, und weiter bevorzugt nanoskaligem Zinkoxid, liegt vorzugsweise in einem Bereich von 1:10 bis 50:1, bezogen auf das Gewicht. Weiter bevorzugt liegt dieses Mischungsverhältnis im Bereich von 1:2 bis 25:1, noch weiter bevorzugt im Bereich von 1:1 bis 15:1, und am meisten bevorzugt von 2:1 bis 10:1.

Der Gehalt an biozid wirksamen Bestandteilen in der erfindungsgemäßen Zusammensetzung ist nicht sonderlich beschränkt. Er sollte jedoch vorzugsweise in einem Bereich liegen, der die Erzielung einer ausreichenden bioziden Wirkung wie oben definiert bei der Verwendung zur Herstellung einer erfindungsgemäßen Harzzusammensetzung und/oder eines erfindungemäßen Kompositmaterials/Laminats nicht unnötig erschweren. Daher liegt der Gehalt an biozidem Wirkstoff vorzugsweise im Bereich von 10-100 Gew.-%, weiter bevorzugt 20-90 Gew.-%, weiter bevorzugt 40-80 Gew.-%.

Die erfindungsgemäße Harzzusammensetzung umfasst mindestens ein Aminoplastharz. Obwohl die vorliegende Erfindung auf Aminoplastharze in ihrer ganzen, im Stand der Technik bekannten Vielfalt anwendbar ist, sind bevorzugte Aminoplastharze Melaminharze. Melaminharze werden in der Industrie weit verbreitet abgewandt, beispielsweise für Beschichtungen von Oberflächen oder für die Herstellung dekorativer Laminate. Von besonderer technischer Bedeutung unter den verfügbaren Melaminharzen sind Melamin-Formaldehyd und Melamin/Harnstoff-Formaldehydharze, die auch erfindungsgemäß bevorzugt sind. Durch ihre hervorragenden Eigenschaften wie beispielsweise Kratzfestigkeit, flammhemmende Eigenschaften, chemische und mechanische Beständigkeit sowie mechanische Härte eignen sie sich in besonderer Weise für stark beanspruchte Gegenstände, insbesondere für Oberflächen des täglichen Gebrauchs. Beispielsweise werden Melaminharze und insbesondere die bevorzugten Melaminharze für Fußböden und Möbeloberflächen verwendet. Durch die erfindungsgemäße Harzzusammensetzung wird ein in besonders vorteilhafter Weise mit bioziden Eigenschaften ausgerüstetes Aminoplastharz bereitgestellt, das seine bioziden Eigenschaften über einen langen Zeitraum auch dann beibehält, wenn es wiederholt erhöhten Temperaturen ausgesetzt wird.

Die erfindungsgemäße Harzzusammensetzung kann hergestellt werden, indem ein in gelöster Form vorliegendes Aminoplastharz mit üblichen Mischvorrichtungen wie beispielsweise Rührern mit der ober beschriebenen bioziden Zusammensetzung vermischt wird. Das Vermischen erfolgt dabei in einer solchen Weise, dass die Mischung aus biozider Zusammensetzung und Aminoplastharz so gründlich verrührt wird, dass eine möglichst gleichmäßige Verteilung der bioziden Zusammensetzung in der Aminoplastharzsuspension erhalten wird, in der die Teilchen dauerhaft in der Schwebe gehalten werden.

Das Aminoplastharz in der erfindungsgemäßen Zusammensetzung kann ein ausgehärtetes Aminoplastharz sein, ist jedoch vorzugsweise ein Harzvorkondensat, das in einem späteren Schritt, wie beispielsweise einem Schritt des Verpressens eines mit erfindungsgemäßen Zusammensetzung imprägnierten Flächengebildes mit einem Trägermaterial unter Druck und erhöhter Temperatur, ausgehärtet wird.

Üblicherweise liegt das Aminoplastharz, dem die biozide Zusammensetzung zugemischt wird, als wässrige oder alkoholische Lösung vor. Die biozide Zusammensetzung kann dem Aminoplastharz in fester und/oder flüssiger Form (z.B. als Lösung des organischen Biozids in einem Lösungsmittel und darin suspendierten Metalloxidteilchen) zugegeben werden.

Die biozide Aminoplastharzsuspension, die durch die oben beschriebene Vorgehensweise erhalten wird, kann dann anschließend direkt weiter verarbeitet werden, z.B. zur Herstellung eines Laminats durch Imprägnieren eines Flächengebildes mit der Zusammensetzung, oder kann in eine feste Harzzusammensetzung überführt werden, z.B. durch Sprühtrocknen, und zu einem späteren Zeitpunkt weiter verarbeitet werden.

Ebenfalls ist es möglich, die biozide Zusammensetzung zum Zeitpunkt der Aminoplastharzsynthese zuzumischen. Hierbei wird vorzugsweise das bei der Aminoplastharzsynthese erzeugte Harzvorkondensat abgekühlt und anschließend mit der bioziden Zusammensetzung vermischt. Vorteilhaft ist dabei, dass direkt aus den Rohstoffen für die Aminoplastsynthese ohne zusätzlichen Zwischenisolierungsschritt des Aminoplastharzes eine biozid ausgerüstete Aminoplastharzzusammensetzung hergestellt werden kann.

Wird die biozide Zusammensetzung dem Aminoplastharz nach der Harzsynthese zugemischt, erfolgt dieses entweder zu einer Lösung des Aminoplastharzes in einem geeigneten Lösungsmittel. Wurde das Aminoplastharz wie oben beschrieben nach seiner Synthese in eine feste Form überführt, so wird es vorzugsweise vor der Zugabe der bioziden Zusammensetzung in eine gelöste Form überführt.

Das erfindungsgemäße Kompositmaterial umfasst ein mit der erfindungsgemäßen Harzzusammensetzung imprägniertes Flächengebilde. Dieses wird hergestellt, indem ein Flächengebilde, das zur Aufnahme einer erfindungsgemäßen Harzzusammensetzung in der Lage ist, mit einer flüssigen Form der erfindungsgemäßen Harzzusammensetzung, d.h. einer Lösung oder Suspension, behandelt wird, und anschließend überschüssiges Lösungsmittel entfernt wird. Als zu imprägnierendes Flächengebilde sind trockene, saugfähige Materialien bevorzugt, wie beispielsweise Papier, Pappe, Gewebe oder Vlies, Holzfurnier, Holzfaserplatten oder Holzspanplatten. Besonders bevorzugt sind Papier, Pappe und textile Materialien wie Gewebe oder Vliese, und besonders bevorzugt ist Papier, insbesondere Dekorpapier oder Overlay-Papier.

Die zur Herstellung dieses Kompositmaterials verwendete Harzzusammensetzung enthält neben dem beschriebenen Aminoplastharz und der bioziden Zusammensetzung vorzugsweise ein Lösungsmittel, insbesondere Wasser und/oder einen Alkohol (z.B. Methanol, Ethanol, Propanol, Buthanol) und kann weitere Zusatzstoffe enthalten, wie sie im Bereich der vorliegenden Aminoplastharzkomposite üblich sind. Beispiele für derartige Zusatzstoffe sind Füllstoffe, Farbstoffe, Pigmente, Antioxidantien, UV-Stabilisatoren, Netzmittel, Trennmittel, Weichmacher, Härter und Vernetzungsmittel.

Darüber hinaus kann die erfindungsgemäße Harzzusammensetzung als weiteren Zusatzstoff Korunde enthalten. Diese bewirken eine Erhöhung der Abriebfestigkeit der erfindungsgemäßen Kompositmaterialien. Dadurch eignen sich die erfindungsgemäßen Kompositmaterialien, z.B. in Form von korundhaltigen Overlay-Papieren, zur Herstellung von Laminaten, die zur Herstellung von Fußböden und anderen stark mechanisch belasteter Oberflächen verwendet werden.

Diese Zusatzstoffe können bereits in der bioziden Zusammensetzung enthalten sein, sie können in der Aminoplastharzkomponente enthalten sein oder separat zu der Imprägnierzusammensetzung zugegeben werden. Ebenfalls können zwei oder mehrere dieser Zugabewege miteinander kombiniert werden, und alle gewünschten Zusatzstoffe unabhängig voneinander auf jedem der vorgeschlagenen Wege zugeführt werden.

Die Auftragmenge der erfindungsgemäßen Harzzusammensetzung auf dem Flächengebilde beträgt üblicherweise 20-300 g/m², vorzugsweise 50-150 g/m²; weiter bevorzugt 90-110 g/m² der imprägnierten Fläche, bezogen auf das Gewicht der imprägnierten Harzzusammensetzung nach dem Trocknen.

In einer weiteren Ausführungsform werden Dekore mit nicht ausgerüstetem Aminoplastharz vorimprägniert. (Aminoplastharz = UF, Triazin-F , Gemische daraus oder Harze, die aus Triazinen, Harnstoff und Formaldehyd gemeinsam kondensiert werden)
Die Beharzungsgrade der Vorimprägnate liegen dann bei ca 40-120%, vorzugsweise 60-100%, weiter bevorzugt 80-90%, bezogen auf das Gewicht des unbeharzten Flächengebildes.
Auf diese Vorgetrockneten Bahnen werden in einem weiteren Arbeitsschritt dann erfindungsgemäße Harzzusammensetzungen in einer Menge von 5-60 g/m² vorzugsweise 15-35 g/m² bezogen auf Festes erfindungsgemäßes Harz aufgetragen.

Die zum Imprägnieren verwendete lösungsmittelhaltige erfindungsgemäße Harzzusammensetzung weist vorzugsweise einen Feststoffgehalt von 20-80 Gew.-%, vorzugsweise 30-70 Gew.-%, weiter bevorzugt 40-60 Gew.-%, und noch weiter bevorzugt 45-55 Gew.-% auf.

Ist das mit der erfindungsgemäßen Harzzusammensetzung imprägnierte Flächengebilde ein Papier oder ein Textil, so beträgt die Auftragsmenge an erfindungsgemäßer Harzzusammensetzung, bezogen auf das Flächengebilde vor dem Imprägnieren, üblicherweise 40-400 Gew.-%, vorzugsweise 70-150 Gew.-%, weiter bevorzugt 90-130 Gew.-%. Wird ein Overlay-Papier verwendet, ist die Harzbeaufschlagung des Overlays typischerweise im Bereich von 200-350% Festharz bezogen auf das Gewicht des Papiers. Hierbei wird ausschließlich das Overlay, nicht aber das darunter liegende trockene oder beharzte, unbedruckte oder bedruckte Dekorpapier mit der Harzzusammensetzung ausgerüstet.

Wie bereits beschrieben, wird das imprägnierte Flächengebilde nach dem Imprägnieren getrocknet und kann dann ggf. mit einem oder mehreren weiteren Flächengebilden zu einem Laminat verpresst werden. Da das Aminoplastharz in der erfindungsgemäßen Harzzusammensetzung vorzugsweise als Aminoplastharzvorkondensat vorliegt, erfolgt beim Erzeugen des Laminats durch Verpressen unter erhöhtem Druck und erhöhter Temperatur eine vollständige Aushärtung der erfindungsgemäßen Harzzusammensetzung.

Bevorzugte erfindungsgemäße Laminate umfassend einerseits direkt beschichtete Produkte, bei denen ein Kompositmaterial, das ein mit der erfindungsgemäßen Harzzusammensetzung imprägniertes Papier oder Textil, vorzugsweise ein Dekorpapier oder ein Overlay-Papier ist, direkt auf einen Trägerwerkstoff wie beispielsweise MDF-Platten, Spanplatten oder Sperrholzplatten, auflaminiert werden.

Anstelle von nur einem auf dem Trägermaterial auflaminierten Dekorfilm können selbstverständlich auch mehrere gleiche oder unterschiedliche Dekorfilme direkt auf dem Trägermaterial auflaminiert werden.

Gemäß einer weiteren Ausführungsform erfasst das erfindungsgemäße Laminat eine oder mehrere Lagen Dekorfilm(e), die mit bindemittelhaltigen Natronkraftpapieren oder Recyclatpapier verpresst sind. Geeignete Bindemittel für solche bindemittelhaltigen Natronkraftpapiere sind beispielsweise Phenolharze, Phenolaminoplastharzmischungen oder -cokondensate. Auf diese Weise werden als Hochdruckschichtstoffplatten (HPL) bezeichnete Produkte erhalten, die eine Dicke von üblicherweise 0,2-2 mm aufweisen. Derartige Laminate mit einer Dicke von 0,2-0,4 mm werden als Dünnlaminate, und solche mit einer Stärke (Dicke) von 0,4-2 mm, vorzugsweise 0,5-1,5 mm, als Dicklaminate bezeichnet. Diese Laminate können nach ihrer Herstellung rückseitig geschliffen und dann auf Trägerwerkstoffe aufgeklebt werden. Der Schleifprozess kann auch entfallen, soweit geeignete Materialien auf der Rückseite des Laminates verpresst wurden (Beispiel: Vulkament bzw. Vulkanfiber)oder zur Verklebung auf Trägerwerkstoffen Klebstofftypen zum Einsatz kommen, die den Rückseitenschliff nicht erfordern (Beispiel: Polyuretankleber, Epoxidharzkleber, Polyesterklebstoffe)

Gemäß einer weiteren Ausführungsform können die HPL-Materialien in einer Dicke von 1-40 mm, vorzugsweise 2-30 mm, weiter bevorzugt 3-20 mm, hergestellt werden. Vorzugsweise erhalten derartige Materialien auf beiden Seiten als äußere Schicht(en) eine oder mehrere Lagen Dekorfilm€, die auf das bindemittelhaltige Natronkraftpapier auflaminiert sind. Sie finden vorzugsweise Anwendung in nicht verklebter Form als freitragende Produkte, beispielsweise für Abtrennungen von Dusch- und Umkleidekabinen, für Tischplatten oder Rammleisten für Krankhauswege.

Die erfindungsgemäßen Harzzusammensetzungen, Kompositmaterialien und Laminate weisen eine exzellente biozide Wirkung auf, die auch bei thermischer Belastung nicht wesentlich beeinträchtigt wird. Diese Wirkung wird nachfolgend anhand einiger Beispiele und Vergleichsbeispiele aufgezeigt.

### Beispiele

In den nachfolgenden Beispielen wurde die biozide Wirkung von Oberflächen gemäß JISZ 2801 getestet. Hierbei wurden die Versuche mit vier verschiedenen Prüfkeimen bei einer Bebrütungstemperatur von 36 ± 2°C durchgeführt. Das Testverfahren dient der Feststellung der bioziden, insbesondere antimikrobiellen Wirkung einer Oberflächen. Dazu wurden die zu untersuchenden Prüfkörper mit einer definierten Keimzahl in einem geeigneten Nährmedium (z.B. CASO-Agar; Heipha Diagnostika GmbH, D-69214 Eppelheim) beschichtet und nach 24 Stunden ausgewertet. Hierzu wurden mit Aminoplastharz beschichtete Prüfkörper in der nachfolgend beschriebenen Weise hergestellt und nach 0 bzw. 24 Stunden aufgewertet. Als Referenz wurden mit Aminoplastharz beschichtete Prüfkörper verwendet, die keine biozide Zusammensetzung enthielten.

Die Prüfung der biozide Wirkung wurde mit folgenden Organismen durchgeführt :

| | | |
|---|---|---|
| *Pseudomonoas aeruginoa* | ATCC 15442 | 2,6x10⁵ KBE/Testfläche |
| *Staphylococcus aureus* | ATCC 6538 | 2,8x10⁵ KBE/Testfläche |
| *Salmonella choleraesius* | ATCC 9898 | 2,2x10⁵ KBE/Testfläche |
| *Escherichia coli* | ATCC 8739 | 2,7x10⁵ KBE/Testfläche |

Beurteilung der bioziden Wirkung erfolgte anhand folgender Einstufungen:

### Reduktion um einen Faktor X nach 24 Stunden:

| | | |
|---|---|---|
| | *X* < 10¹ | keine signifikante biozide Wirkung |
| 10¹ ≤ | *X* < 10² | geringe biozide Wirkung |
| 10² ≤ | *X* < 10³ | signifikante biozide Wirkung |
| 10³ ≤ | *X* | starke biozide Wirkung |

### Herstellung biozider Zusammensetzungen

### Modifizierungsmittel M-1

In einem Rührbehälter werden in eine vorgelegte Menge von 4,294 kg Diethylenglykol 6,27 kg einer 20%igen, wässrigen Benzisothiazolinon Lösung; 2,08 kg einer 20%igen wässrigen Methylisothiazolinon ; 4,84 kg einer wässrigen 50%igen wässrigen Formlaldeyd -Lösung in angegebener Reihenfolge eingerührt. Die so erhaltene Lösung wird mit ca 0,36kg einer 15%igen wässrigen Amidosulfonsäure auf pH 5-6 eingestellt. Es entstehen 17,9 kg eines bioziden Modifizierungsmittels.

### Herstellung von Harzzusammensetzungen

### Imprägnierflotte, Vergleich (IV-1)

1000 kg einer Mikrodispersion von Melaminharz in Wasser (Harzgehalt 55 Gew.-%) werden mit 2,3 kg eines Härters vom Sulfonsäure-Typ, sowie den erforderlichen Mengen üblicher Netzmittel, Trennmittel und ggf. Entschäumer versetzt. Anschließend werden der Harzflotte 17,9 kg des oben beschriebenen Modifizierungsmittels M-1 unter Rühren zugesetzt, wobei das in M-1 enthaltene Formaldehyd rasch an die Melaminharzmatrix addiert. Nach Homogenisierung steht der Ansatz zur Weiterverarbeitung bereit.

### Imprägnierflotte, Vergleich (IV-2)

In der gleichen Weise wie bei IV-1 wird eine Imprägnierflotte hergestellt, der nach Homogenisierung zusätzlich 0,920 kg einer wässrigen Siberkomplexlösung (Ag⁺-Konzentration: 6 Gew.-%) zugesetzt werden. Nach einer weiteren Rührzeit von 10 min. steht der Ansatz zur Weiterverarbeitung bereit.

### Imprägnierflotte, Erfindungsgemäß (IE-1)

In der gleichen Weise wie bei IV-1 wird eine Imprägnierflotte hergestellt, der nach Homogenisierung zusätzlich 10 kg einer wässrigen 50 Gew.%-igen Suspension von nanoskaligem ZnO mit einer mittleren Teilchengröße von 40 nm eingerührt werden. Nach einer weiteren Rührzeit von 10 Minuten steht der Ansatz zur Weiterverarbeitung bereit.

### Imprägnierflotte, Vergleich (IV-3)

1000 kg einer Mikrodispersion von Melaminharz in Wasser (Harzgehalt 55 Gew. -%) werden mit 2, 3 kg eines Härters vom Sulfonsäure-Typ, sowie den erforderlichen Mengen üblicher Netzmittel, Trennmittel und ggf. Entschäumer versetzt. Anschließend werden 10 kg einer wässrigen 50 Gew.%-igen Suspension von nanoskaligem ZnO mit einer mittleren Teilchengröße von 40 nm eingerührt. Nach einer weiteren Rührzeit von 10 Minuten steht der Ansatz zur Weiterverarbeitung bereit.

Die hergestellten Imprägnierflotten IV-1 bis IV-3 und IE-1 weisen die in Tabelle 1 aufgeführten Gehalte an bioziden Wirkstoffen auf, jeweils bezogen auf festes Aminoplastharz:

**Tabelle 1**

| biozider Wirkstoff | Imprägnierflotte | | | |
|---|---|---|---|---|
| | IV-1 | IV-2 | IV-3 | IE-1 |
| Benzisothiazolinon (Gew.-%). | 0,27 | 0,27 | - | 0,27 |
| Methylisothiazolinon (Gew.-%) | 0,09 | 0, 09 | - | 0,09 |
| Formaldehyd (Gew.-%) | 0,51 | 0,51 | - | 0,51 |
| nanoskaliges ZnO (Gew.-%) | - | - | 0,9 | 0,9 |
| Ag⁺ (ppm) | - | 100 | - | - |

### Herstellung von Kompositmaterialien/Laminaten

Mit den Imprägnierflotten IV-1 bis IV-3, IE-1 und einer weiteren Vergleichsflotte IV-4 (wie Imprägnierflotte IV-1, aber ohne biozide Wirkstoffe) wurden harzbeschichtete Dekorpiere hergestellt, indem Dekorpapiere oder Overlay mit den jeweiligen Flotten imprägniert und bei 130°C getrocknet wurden. Die Papiergrundgewichte, Harzbeschichtungsmengen und -verhältnisse sowie die Restgehalte an flüchtigen Bestandteilen nach dem Trocknen sind in Tabelle 2 gezeigt.

**Tabelle 2**

| **Versuch** | Flotte | Dekorpapier (Gewicht) ¹⁾ | Harzauftrag (Gew. / %) ¹⁾ | fl. Best .²⁾ (%) |
|---|---|---|---|---|
| Vergleich (V1) | IV-1 | 100 | 120/120 | 5,9 |
| Vergleich (V2) | IV-2 | 28 | 79.8/285 | 6,4 |
| Vergleich (V3) | IV-3 | 28 | 79,8/285 | 6,5 |
| Vergleich (V4) | IV-4 | 28 | 79,8/285 | 6,5 |
| Erfindung (E1) | IE-1 | 118 | 106,2/90 | 5,5 |

| | | | | |
|---|---|---|---|---|
| ^{**1**)} Gewicht in g/m², % bezogen auf das Papiergewicht (atro) ^{**2**)} Rest flüchtiger Bestandteile nach dem Trocknen | | | | |

Die so hergestellten Imprägnate wurden nach üblichen Vorgehensweisen auf 3 handelsüblichen Kernlagen für HPL verpresst, wodurch Kompositmaterialien/Laminate erhalten wurden. Diese wurden in der oben beschriebenen Weise auf die biozide Wirkung ihrer Oberfläche untersucht. Die Untersuchung erfolgte entweder unmittelbar nach der Herstellung oder nach einer Alterung (Lagerung für eine bestimmte Zeit bei einer bestimmten Temperatur und Luftfeuchtigkeit) sowie nach Einwirkung einer erhöhten Temperatur für einen bestimmten Zeitraum. Die Bedingungen und Ergebnisse sind in Tabelle 3 angegeben.

Wie die Ergebnisse zeigen, haben die erfindungsgemäßen Kompositmaterialien/Laminate eine exzellente biozide wirkung, die auch durch Einwirkung einer hohen Temperatur für einen längeren Zeitraum praktisch unverändert bleibt. Daher ist die biozide Wirkung der erfindungsgemäßen Materialien gegenüber dem Stand der Technik in unerwarteter Weise verbessert.

**Tabelle 3**

| **Versuch** | **Biozid im Festharz** | | | | | **Alterung** | | **Keimreduktionen (Zehnerpotenzen)** | | | |
|---|---|---|---|---|---|---|---|---|---|---|---|
| | MIT Gew.% | BIT Gew.% | Fo Gew.% | ZnO Gew.% | Ag⁺ ppm | Zeit | Temp. (°C) | Pseudonomas aeroginosa | Staphyloc. aureus | Salmonella Choleraesius | E. Coli |
| **V4** | - | - | - | - | - | 20 min | 1.80 | 0 | 0,69 | 0, 83 | 0 |
| **V1-a** | 0,09 | 0,27 | 0,5 | - | - | 14Tage | 20 | >4,1 | 2,5 | 3,2 | 3,0 |
| **V1-b** | 0,09 | 0,27 | 0,5 | - | - | 14 Tage | 40 | 2,1 | 2,1 | 2,6 | 0,3 |
| **V1-c** | 0,09 | 0,27 | 0,5 | - | - | 14 Tage | 80 | 0,6 | 2,0 | 1,0 | -0,2 |
| **V1-d** | 0,09 | 0,27 | 0,5 | - | | 20 Min | 180 | 0,3 | 1,1 | 1,2 | 0,1 |
| **V2-a** | 0,09 | 0,27 | 0,5 | - | 100 | - | - | >4,4 | 2,2 | 1,7 | 0,2 |
| **V2-b** | 0,09 | 0,27 | 0,5 | - | 100 | 20 min. | 180 | 0,8 | 0,6 | 1,3 | 0,0 |
| **E1-a** | 0,09 | 0,27 | 0,5 | 0,9 | - | - | - | >4,4 | >4,4 | >4,3 | >4,4 |
| **E1-b** | 0,09 | 0,27 | 0,5 | 0,9 | - | 20 min. | 180 | >4,4 | >4,4 | >4,3 | >4,4 |
| **V3** | - | - | - | 0,9 | | 20 min. | 180 | 0,11 | 0,35 | 0,48 | 0 |

## Patentansprüche

1. Harzzusammensetzung, die folgendes umfasst:
(1) mindestens ein Aminoplastharz und
(2) eine biozide Zusammensetzung, umfassend
(i) mindestens eine organische biozide Verbindung, und
(ii)ein anorganisches Biozid,
wobei das anorganische Biozid aus mindestens einem nanoskaligen Metalloxid besteht, ausgewählt aus ZnO, BaTiO₃, SrTiO₃, TiO₂, WO₃, SnO₂, Al₂O₃, NiO, ZrO₂, und MgO.

2. Harzzusammensetzung gemäß Anspruch 1, worin das mindestens eine nanoskalige Metalloxid ZnO umfasst.

3. Harzzusammensetzung gemäß Anspruch 1 oder 2, worin das mindestens eine nanoskalige Metalloxid eine durchschnittliche Teilchengröße von 1-1000 nm aufweist, vorzugsweise 5-500 nm, weiter bevorzugt 10-250 nm, und noch weiter bevorzugt 20-100 nm.

4. Harzzusammensetzung gemäß mindestens einem der Ansprüche 1-3, worin die mindestens eine organische biozide Verbindung mindestens ein Isothiazolinon-Derivat umfasst, dass vorzugsweise ausgewählt ist aus Benzylisothiazolinonen, Methylisothiazolinonen, Chlorisothiazolinonen, Chlormethylsothiazolinonen und Mischungen daraus, und weiter bevorzugt aus Benzylisothiazolinonen, Methylisothiazolinonen und Mischungen daraus.

5. Harzzusammensetzung gemäß mindestens einem der Ansprüche 1-4, worin das Mischungsverhältnis von der mindestens einen organischen bioziden Verbindung zu nanoskaligem Metalloxid, bezogen auf Gew.-%, im Bereich von 1:10 bis 50:1 liegt, vorzugsweise im Bereich von 1:2 bis 25:1, weiter bevorzugt im Bereich von 1:1 bis 15:1, und noch weiter bevorzugt im Bereich von 2:1 bis 10:1.

6. Harzzusammensetzung gemäß mindestens einem der Ansprüche 1-5, worin die biozide Zusammensetzung in einer Menge, bezogen auf den Gesamtfeststoffgehalt der Harzzusammensetzung, von 0,1-8 Gew.-% vorhanden ist, vorzugsweise 0,5-5 Gew.-%, und weiter bevorzugt 1-3 Gew.-%.

7. Harzzusammensetzung gemäß mindestens einem der Ansprüche 1-6, worin mindestens ein Isothiazolinon-Derivat und nanoskaliges Metalloxid, jeweils bezogen auf den Gesamtfeststoffgehalt der Harzzusammensetzung, in Mengen von 0,1-0,5 Gew.-% bzw. 0,5-4 Gew.-% vorhanden sind, vorzugsweise 0,2-0,4 Gew.-% bzw. 1-3 Gew.-%.

8. Harzzusammensetzung gemäß mindestens einem der Ansprüche 1-7, die ferner mindestens eines umfasst, ausgewählt aus Füllstoffen, Farbstoffen, Pigmenten, Antioxidantien, UV-Stabilisatoren, Netzmitteln, Trennmitteln, Weichmachern, Härtern, und Vernetzungsmitteln.

9. Harzzusammensetzung gemäß Anspruch 8, die als Füllstoff mindestens eine Korundzusammensetzung umfasst.

10. Harzzusammensetzung gemäß mindestens einem der Ansprüche 1-9, die ferner ein Lösungsmittel für das mindestens eine Melaminharz umfasst und in Form einer Lösung, Dispersion oder Suspension vorliegt.

11. Harzzusammensetzung gemäß Anspruch 10, worin das Lösungsmittel ausgewählt ist aus Wasser, mit Wasser mischbaren Lösungsmitteln und beliebigen Mischungen daraus.

12. Harzzusammensetzung gemäß Anspruch 11, worin das mit Wasser mischbare Lösungsmittel ausgewählt ist aus wassermischbaren Alkoholen, Ketonen, Glykolen und Glykolethern.

13. Harzzusammensetzung gemäß mindestens einem der Ansprüche 10-12, worin das Lösungsmittel Wasser umfasst.

14. Harzzusammensetzung gemäß mindestens einem der Ansprüche 10-13, die einen Feststoffgehalt von 20-80 Gew.-% aufweist, vorzugsweise 30-70 Gew.-%, weiter bevorzugt 40-60 Gew.-%, und noch weiter bevorzugt 45-55 Gew.-%.

15. Harzzusammensetzung gemäß mindestens einem der Ansprüche 1-14, worin das Aminoplastharz ein Melaminharz ist.

16. Kompositmaterial, das ein mit einer Harzzusammensetzung gemäß mindestens einem der Ansprüche 1-15 imprägniertes Flächengebilde umfasst.

17. Kompositmaterial gemäß Anspruch 16, worin das mit der Harzzusammensetzung imprägnierte Flächengebilde ausgewählt ist aus einem Papier, vorzugsweise einem Dekorpapier oder ein Overlay, einem Textil und einem Vlies.

18. Laminat, das einen Trägerwerkstoff und auf mindestens einem Teil von mindestens einer Oberfläche eine Harzzusammensetzung gemäß mindestens einem der Ansprüche 1-15 und/oder ein Kompositmaterial gemäß Anspruch 16 oder 17 umfasst.

19. Laminat gemäß Anspruch 18, das mindestens eine Schicht mindestens eines Kompositmaterials gemäß Anspruch 16 auf einem Trägerwerkstoff, vorzugsweise ausgewählt aus MDF-Platten, Spanplatten und Sperrholzplatten, umfasst.

20. Laminat gemäß Anspruch 18, das eine oder mehrere Lagen eines Kompositmaterials gemäß Anspruch 17 und einen Träger, ausgewählt aus bindemittelhaltigem Natronkraftpapier und bindemittelhaltigem Recyclatpapier umfasst.

21. Verwendung eines Kompositmaterial gemäß Anspruch 16 oder 17 oder eines Laminats gemäß mindestens einem der Ansprüche 18-20 zur Herstellung von Oberflächen mit thermostabilen bioziden Eigenschaften, vorzugsweise ausgewählt aus Arbeitsflächen für Küchen, Labors, Krankenhäuser, Caravans, Hotels und Gaststätten; und Oberflächen für Fußböden, Türen, Wintergärten, Aufzüge, Diskotheken, Nasszellen, Innenausbauten in Verkehrsmitteln, Trennwänden und Messebauten.

## Claims

1. A resin composition which comprises
(1) at least one aminoplast resin and
(2) a biocidal composition comprising
(i) at least one organic biocidal compound, and
(ii) an inorganic biocide,
wherein the inorganic biocide consists of at least one nanoscale metal oxide selected from ZnO, BaTiO₃, SrTiO₃, TiO₂, WO₃, Al₂O₃, CuO, NiO, ZrO₂ and MgO.

2. The resin composition of claim 1, wherein the at least one nanoscale metal oxide comprises ZnO.

3. The resin composition of claim 1 or 2, wherein the at least one nanoscale metal oxide has an average particle size of 1-1,000 nm, preferably 5-500 nm, more preferably 10-250 nm, and even further preferred 20-100 nm.

4. The resin composition of at least one of claims 1-3, wherein the at least one organic biocidal compound comprises at least one isothiazolinone derivative, which preferably is selected from benzylisothiazolinones, methylisothiazolinones, chloroisothiazolinones, chloromethylisothiazolinones and mixtures thereof, and more preferably from benzylisothiazolinones, methylisothiazolinones and mixtures thereof.

5. The resin composition of at least one of claims 1-4, wherein the mixing ratio of the at least one organic biocidal compound to nanoscale metal oxide, based on wt.-%, is in the range of 1:10 to 50:1, preferably 1:2 to 25:1, more preferably 1:1 to 15:1, and even further preferred 2:1 to 10:1.

6. The resin composition of at least one of claims 1-5, wherein the biocidal composition is present in an amount, based on the total solids content of the resin composition, of 0.1-8 wt.-%, preferably 0.5-5 wt.-%., and more preferably 1-3 wt.-%.

7. The resin composition of at least one of claims 1-6, wherein at least one isothiazolinone derivative and nanoscale metal oxide, each based on the total solids content of the resin composition, is present in an amount of 0.1-0.5 wt.-% and 0.5-4 wt.-%, respectively, and preferably 0.2-0.4 wt.-% and 1-3 wt.-%, respectively.

8. The resin composition of at least one of claims 1-7, which further comprises at least one of the following selected from fillers, colorants, pigments, antioxidants, UV stabilizers, wetting agents, separating agents, softeners, hardeners and cross-linking agents.

9. The resin composition of Claim 8, which comprises at least one corundum composition as a filler.

10. The resin composition of at least one of claims 1-9, which further comprises a solvent for the at least one melamine resin and is present in the form of a solution, dispersion or suspension.

11. The resin composition of Claim 10, wherein the solvent is selected from water, solvents mixable with water, and any mixtures thereof.

12. The resin composition of Claim 11, wherein the solvent mixable with water is selected from water-soluble alcohols, ketones, glycols and glycol ethers.

13. The resin composition of at least one of claims 10-12, wherein the solvent comprises water.

14. The resin composition of at least one of claims 10-13 which has a solids content of 20-80 wt.-%, preferably 30-70 wt.-%, more preferably 40-60 wt.-%, and even more preferred 45-55 wt.-%.

15. The resin composition of at least one of claims 1-14, wherein the aminoplast resin is a melamine resin.

16. A composite material which comprises a planar structure impregnated with a resin composition of at least one of claims 1-15.

17. The composite material of Claim 16, wherein the planar structure impregnated with the resin composition is selected from a paper, preferably a decorative paper or an overlay, a textile and a fleece.

18. A laminate which comprises a carrier material and on at least part of at least one surface a resin composition of at least one of claims 1-15 and/or a composit material of claim 16 or 17.

19. The laminate of claim 18, which comprises at least one layer of at least one composite material of claim 16 on a carrier material, preferably selected from MDF boards, chipboards and plywood boards.

20. The laminate of claim 18, which comprises one or more layers of a composite material of Claim 17 and a carrier selected from sodium kraft paper containing binding agents and recycled paper containing binding agents.

21. The use of a composite material of claim 16 or 17, or of a laminate of at least one of claims 18-20 for producing surfaces having thermostable biocidal properties, preferably selected from work surfaces for kitchens, laboratories, hospitals, caravans, hotels and guesthouses; surfaces for floors, doors, conservatories, lifts, discotheques, wet rooms, internal fittings in means of transport, partition walls and trade show structures..

## Revendications

1. Composition de résine comprenant les composants suivants :
(1) au moins une résine aminoplastique et
(2) une composition biocide, contenant
(i) au moins un composé biocide organique, et
(ii) un biocide inorganique,
le biocide inorganique se composant d'au moins un oxyde métallique nanoscalaire, choisi parmi ZnO, BaTiO₃, SrTiO₃, TiO₂, WO₃, SnO₂, Al₂O₃, NiO, ZrO₂, et MgO.

2. Composition de résine selon la revendication 1, dans laquelle le au moins un oxyde métallique nanoscalaire comprend du ZnO.

3. Composition de résine selon la revendication 1 ou 2, dans laquelle le au moins un oxyde métallique nanoscalaire présente une taille de particules moyenne de 1 à 1000 nm, de préférence de 5 à 500 nm, plus préférentiellement de 10 à 250 nm, et encore plus préférentiellement de 20 à 100 nm.

4. Composition de résine selon au moins une des revendications 1 à 3, dans laquelle le au moins un composé biocide organique comprend au moins un dérivé d'isothiazolinone, qui est choisi préférentiellement parmi les benzylisothiazolinones, les méthylisothiazolinones, les chloroisothiazolinones, les chlorométhylisothiazolinones et des mélanges de celles-ci, et encore plus préférentiellement parmi les benzylisothiazolinones, les méthylisothiazolinones et leurs mélanges.

5. Composition de résine selon au moins une des revendications 1 à 4, dans laquelle le rapport de mélange entre le au moins un composé biocide organique et l'oxyde métallique nanoscalaire, par rapport au % en poids, se situe dans la plage de 1/10 à 50/1, de préférence dans la plage de 1/2 à 25/1, plus préférentiellement dans la plage de 1/1 à 15/1, et encore plus préférentiellement dans la plage de 2/1 à 10/1.

6. Composition de résine selon au moins une des revendications 1 à 5, dans laquelle la composition biocide est présente en une quantité, par rapport à la teneur en matières solides totale de la composition de résine, de 0,1 à 8 % en poids, de préférence de 0,5 à 5 % en poids et encore plus préférentiellement de 1 à 3 % en poids.

7. Composition de résine selon au moins une des revendications 1 à 6, dans laquelle au moins un dérivé d'isothiazolinone et l'oxyde métallique nanoscalaire sont présents en des quantités, respectivement par rapport à la teneur en matières solides totale de la composition de résine, de 0,1 à 0,5 % en poids ou de 0,5 à 4 % en poids, de préférence de 0,2 à 0,4 % en poids ou de 1 à 3 % en poids.

8. Composition de résine selon au moins une des revendications 1 à 7, qui comprend en outre au moins un élément choisi parmi les charges, les colorants, les pigments, les antioxydants, les stabilisateurs d'UV, les agents mouillants, les agents de démoulage, les plastifiants, les durcisseurs et les agents réticulants.

9. Composition de résine selon la revendication 8, qui comprend au moins une composition de corindon comme charge.

10. Composition de résine selon au moins une des revendications 1 à 9, qui comprend en outre un solvant pour la au moins une résine de mélamine et se présente sous forme d'une solution, dispersion ou suspension.

11. Composition de résine selon la revendication 10, dans laquelle le solvant est choisi parmi l'eau, les solvants miscibles avec l'eau et des mélanges quelconques de ceux-ci.

12. Composition de résine selon la revendication 11, dans laquelle le solvant miscible avec l'eau est choisi parmi les alcools, les cétones, les glycols et les éthers de glycols, miscibles avec l'eau.

13. Composition de résine selon au moins une des revendications 10 à 12, dans laquelle le solvant comprend de l'eau.

14. Composition de résine selon au moins une des revendications 10 à 13, qui comprend une teneur en matières solides de 20 à 80 % en poids, de préférence de 30 à 70 % en poids, plus préférentiellement de 40 à 60 % en poids, et encore plus préférentiellement de 45 à 55 % en poids.

15. Composition de résine selon au moins une des revendications 1 à 14, dans laquelle la résine aminoplastique est une résine de mélamine.

16. Matériau composite qui comprend une feuille imprégnée avec une composition de résine selon au moins l'une des revendications 1 à 15.

17. Matériau composite selon la revendication 16, dans lequel la feuille imprégnée avec la composition de résine est choisie parmi un papier, de préférence un papier décor ou un revêtement, un textile et un voile.

18. Stratifié qui comprend un matériau support et, sur au moins une partie d'au moins une surface, une composition de résine selon au moins une des revendications 1 à 15 et/ou un matériau composite selon la revendication 16 ou 17.

19. Stratifié selon la revendication 18, qui comprend au moins une couche d'au moins un matériau composite selon la revendication 16 sur un matériau support, de préférence choisi parmi les panneaux en MDF, les panneaux de particules et les panneaux de contreplaqué.

20. Stratifié selon la revendication 18, qui comprend une ou plusieurs couches d'un matériau composite selon la revendication 17 et un support, choisi parmi le papier kraft contenant des liants et le papier recyclé contenant des liants.

21. Utilisation d'un matériau composite selon la revendication 16 ou 17 ou d'un stratifié selon au moins une des revendications 18 à 20 pour la fabrication de surfaces ayant des propriétés biocides thermostables, de préférence choisies parmi les plans de travail pour cuisines, laboratoires, hôpitaux, caravanes, hôtels et auberges ; et les surfaces pour les sols, portes, jardins d'hiver, ascenseurs, discothèques, nacelles, aménagements intérieurs dans les moyens de transport, cloisons et installations de foires.
